(19) Europäisches Patentamt

European Patent Office

Office européen des brevets

(11) **EP 0 608 231 B1**

(12) **EUROPÄISCHE PATENTSCHRIFT**

(45) Veröffentlichungstag und Bekanntmachung des Hinweises auf die Patenterteilung:
**10.07.1996 Patentblatt 1996/28**

(21) Anmeldenummer: **92908596.7**

(22) Anmeldetag: **14.04.1992**

(51) Int Cl.[6]: **H04N 7/26**

(86) Internationale Anmeldenummer:
**PCT/EP92/00843**

(87) Internationale Veröffentlichungsnummer:
**WO 92/20190 (12.11.1992 Gazette 1992/28)**

(54) **VERFAHREN ZUR BILDSIGNALCODIERUNG**

PROCESS FOR CODING PICTURE SIGNALS

PROCEDE DE CODAGE DE SIGNAUX VIDEO

(84) Benannte Vertragsstaaten:
**AT BE CH DE ES FR GB IT LI LU NL**

(30) Priorität: **25.04.1991 DE 4113505**

(43) Veröffentlichungstag der Anmeldung:
**03.08.1994 Patentblatt 1994/31**

(73) Patentinhaber: **DEUTSCHE THOMSON-BRANDT GMBH**
**D-78048 Villingen-Schwenningen (DE)**

(72) Erfinder:
- **HERPEL, Carsten**
  **D-3000 Hannover 1 (DE)**
- **KEESEN, Heinz-Werner**
  **D-3000 Hannover 1 (DE)**

(74) Vertreter: **Hartnack, Wolfgang, Dipl.-Ing.**
**Deutsche Thomson-Brandt GmbH**
**Patentabteilung**
**Göttinger Chaussee 76**
**30453 Hannover (DE)**

(56) Entgegenhaltungen:
**EP-A- 0 262 555      EP-A- 0 290 085**

- **Proceedings, SPIE-The International Society for Optical Engineering; Image Algorithms and Techniques, 12.-14. Februar 1990, Santa Clara, California, US; Seiten 378-388; W. Jass :' A hybrid DCT-codec with local adaptivity for the interlaced HDTV-transmission with 140 Mbit/s'**
- **SIGNAL PROCESSING OF HDTV, II Proceedings of the Third International Workshop on HDTV, Turin, IT, 30.8.-1.9.1989, Seiten 739-748; R Kutka: 'Block adaptive frame/field DCT coding decided by vertical difference test'**
- **FUNKSCHAU Bd. 60, Nr. 26, 16. Dezember 1988, MÜNCHEN, DE Seiten 60 - 63; P. VOGEL: 'Videobild auf der Datenleitung'**

**Beschreibung**

Die Erfindung betrifft ein Verfahren zur Bildsignalcodierung.

<u>Stand der Technik</u>

In DE-A-3 642 664 ist eine Transformations-Schaltung angegeben, mit deren Hilfe eine 8*8- oder 2*(4*8)-DCT-Transformation durchgeführt werden kann (DCT = discrete cosine transformation). Durch die Wahl des logischen Pegels einer Schaltleitung kann zwischen einer 8*8- und einer 2*(4*8)-DCT umgeschaltet werden.

In Signal Processing of HDTV, II, Proceedings of the Third International Workshop on HDTV, Turin, 30.08.-01.Sep. 1989, R. Kutka, 'Block adaptive frame/field DCT coding decided by vertical difference test' und in Proceedings, SPIE-The International Society for Optical Engineering, Image Algorithms and Techniques, 12.-14.Feb. 1990, Santa Clara, W. Jass, 'A hybrid DCT-codec with local adaptivity for the interlaced HDTV-transmission with 140MBit/s', werden abhängig von einem 'vertical difference test' innerhalb eines quadratischen Blocks die Zeilenabschnitte vor der Transformation so umsortiert, daß sich in der oberen bzw. unteren Blockhälfte nur Zeilenabschnitte aus einem Halbbild befinden. Im Fall der Umsortierung wird jede der beiden Blockhälften mit einer nicht-quadratischen Transformation verarbeitet, anderenfalls mit einer quadratischen Transformation.

Aus Funkschau, Bd. 60, Nr. 26, 16.Dez. 1988, München, P. Vogel, 'Videobild auf der Datenleitung' ist es bekannt, bei der Codierung jeweils vier quadratische Bildpunkt-Blöcke zu einem Macro-block zusammenzufassen.

In den beiden an zweiter Stelle genannten Entgegenhaltungen werden im Fall von dynamischem Bildinhalt <u>innerhalb eines Blocks</u> (z.B. 16*16 Bildpunkte) jeweils die aus einem der beiden Halbbilder stammenden Bildpunkte mit einer <u>speziellen</u> DCT (8*16) transformiert. Bei statischem Bildinhalt wird eine übliche quadratische DCT (16*16) verwendet.

Der Nachteil dieses Standes der Technik ist der relativ hohe Aufwand für die zweite Spezial-DCT.

<u>Erfindung</u>

Der Erfindung liegt die Aufgabe zugrunde, ein Verfahren zur Bildcodierung mittels eines für progressiv abgetastete Bildsignale geeigneten Codecs anzugeben, bei dem auch im Interlace abgetastete Eingangssignale verarbeitet werden können. Diese Aufgabe wird durch das in Anspruch 1 angegebene erfindungsgemäße Verfahren gelöst.

Im Prinzip besteht das erfindungsgemäße Verfahren darin, daß bei einem Hybridcoder, der Blöcke von progressiv abgetasteten Bildpunkten verarbeiten kann, vor der Codierung Zeilenabschnitte von Blöcken von interlace-abgetasteten Bildpunkten innerhalb von jeweils zwei vertikal übereinanderliegenden Blöcken so angeordnet werden, daß innerhalb jedes dieser Blöcke nur Zeilenabschnitte aus einem Halbbild der Bildsignale enthalten sind.

Dabei wird Bewegung im Bildinhalt ermittelt und es werden die Zeilenabschnitte im Fall von dynamischem Bildinhalt innerhalb der übereinanderliegenden Blöcke umsortiert.

Der Erfindung liegt die Erkenntnis zugrunde, daß auch innerhalb zweier quadratischer, übereinanderliegender Blöcke (16*16 oder, wie in der Beschreibung angegeben, 8*8) zwischen den Bildpunkten eines Halbbilds eine relativ hohe Korrelation besteht und eine quadratische DCT eine entsprechend hohe Codier-Effizienz erlaubt. Unter dieser Voraussetzung ist nun der Hardware-Aufwand für eine Umsortierung oder -Adressierung von Zeilen innerhalb dieser beiden Blöcke deutlich geringer als der Aufwand für eine spezielle, nicht-quadratische DCT.

Die Erfindung erlaubt somit eine kostengünstige und effektive 8*8 (oder 16*16)-DCT unabhängig von Bewegung im Bildinhalt von Interlace-Bildsignalen.

Vorteilhafte Weiterbildungen des erfindungsgemäßen Verfahrens ergeben sich aus den zugehörigen Unteransprüchen.

Bei einem von ISO-MPEG (ISO: International Organisation for Standardization, MPEG: Motion Picture Expert Group) unter der Normvorschlagsnummer ISO 11172 vorgestellten Verfahren zur Hybridcodierung von Bildsignalen werden blockweise, progressiv abgetastete Eingangssignale mit einer DCT verarbeitet, wobei jeweils Blöcke von 8*8 Bildpunkten codiert bzw. decodiert werden und eine Sequenz von interframe-codierten Bildern in regelmäßigen Abständen von intraframe-codierten Bildern durchsetzt ist. Dabei beruht die Codiereffektivität auch auf der relativ hohen Korrelation von Bildpunkten innerhalb solcher Blöcke. Will man nun auch im Interlace abgetastete Quellsignale mit einem solchen Hybridcoder verarbeiten, sinkt im Fall von dynamischem Bildinhalt die Codiereffektivität bzw. steigt die zur Codierung erforderliche Datenrate an, weil jeweils jede zweite Zeile aus einem Block unterschiedlichen Bewegungsphasen entstammt und dadurch die Korrelation der Bildpunkte innerhalb eines solchen Blocks sinkt. Im Fall von statischem Bildinhalt bleibt die Codiereffektivität dagegen erhalten.

Bei dynamischem Bildinhalt werden nun die einem ersten Halbbild zugehörenden Zeilen aus zwei übereinanderliegenden 8*8-Bildpunkt-Blöcken zu einem ersten 8*8-Block zusammengefaßt und die dem entsprechenden zweiten Halbbild zugehörenden Zeilen aus diesen zwei übereinanderliegenden 8*8-Bildpunkt-Blöcen zu einem zweiten

8*8-Block zusammengefaßt und dem Hybridcoder in dieser Form zugeführt.

Durch die Reorganisation der Einganssignale muß bei Interlace-Eingangssignalen nicht wie in DE-A-36 42 664 zwischen einer 8*8- und 2*(4*8)-DCT-Transformation im Hybridcoder umgeschaltet werden, sondern es kann vorteilhaft auch bei dynamischem Bildinhalt eine 8*8-DCT durchgeführt werden.

Mit Hilfe einer Bewegungsdetektion wird ermittelt, ob statischer oder dynamischer Bildinhalt vorliegt und dementsprechend eine Umsortierung oder -Adressierung der Zeilen vorgenommen. Durch ein Bit pro Block bzw. Doppel-Block kann dabei diese Information den codierten Daten des jeweiligen Blocks hinzugefügt werden.

Bei der Decodierung werden die entsprechenden Zeilen wieder in die ursprüngliche Reihenfolge gebracht, wobei die Bewegungsinformation ausgewertet wird.

Bei obengenanntem Normvorschlag sind jeweils vier quadratförmig angeordnete Luminanz-Bildpunkt-Blöcke zu einem Macro-Block zusammengefaßt. Vorteilhaft gehören jeweils zwei der übereinanderliegenden Blöcke eines solchen Macro-Blocks im obenbeschriebenen Sinne zusammen. Dabei kann auch ein Bit pro Macro-Block die Umsortierung anzeigen.

Zeichnungen

Anhand der Zeichnungen werden Ausführungsbeispiele der Erfindung beschrieben. Die Zeichnungen zeigen in:

Fig. 1    Zeilenanordnung innerhalb von Blöcken bei statischem und dynamischem Bildinhalt;

Fig. 2    Blockschaltbild mit erfindungsgemäßen Zusatzschaltungen zu einem Codec.

Ausführungsbeispiele

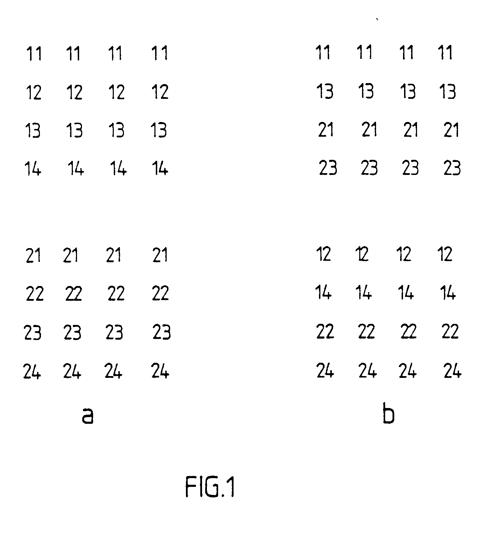

Fig. 1a und Fig. 1b zeigen jeweils zwei übereinanderliegende Blöcke von Luminanz- oder Chrominanz-Bildpunkten in der x-y-Ebene. Die Blöcke haben zur einfacheren Darstellung statt einer Größe von 8*8 Bildpunkten jeweils eine Größe von 4*4 Bildpunkten. Statt 8*8 können die Blöcke auch allgemein eine Größe von (2*n)*(2*m) haben, n=1,2,3,... , m=1,2,3,... .

Die zweistelligen Zahlen markieren jeweils die räumliche Lage eines Bildpunkts. Die erste Ziffer dieser Zahlen stellt die Block-Nummer dar, der zweite die Zeilen-Nummer innerhalb eines Blocks.

Die zu codierenden bzw. decodierten Bildpunkte des bekannten Hybridcoders in progressiv abgetaster Form sind gemäß Fig. 1a angeordnet. Dies gilt ebenfalls für Bildpunkte mit statischem Bildinhalt bei interlace-abgetasteten Bildpunkten. Bei dynamischem Bildinhalt werden vor der Codierung die Zeilen jeweils zweier übereinanderliegender Blöcke gemäß Fig. 1b vertauscht und nach der Decodierung wieder entsprechend Fig. 1a angeordnet.

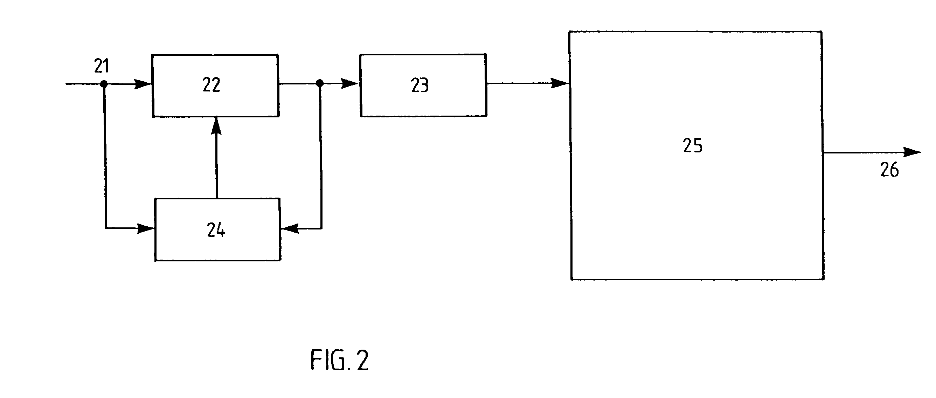

Fig. 2 zeigt einen Hybridcoder 25 entsprechend obengenanntem Normvorschlag. Dem Eingang 21 werden interlace-abgetastete Bildsignale von Bild n zugeführt und gelangen in einen Bildspeicher 22 und einen Bewegungsdetektor 24. Aus dem Bildspeicher 22 werden vom Bewegungsdetektor 24 benötigte Daten (zwei übereinanderliegende Blöcke) von Bild n-1 und die Zeilen-Abschnitte der beiden jeweils beteiligten Blöcke in einen Blockspeicher 23 ausgelesen, von dem der Hybridcoder jeweils 8*8-Blöcke abgreifen kann. Im Blockspeicher 23 werden die Bildpunkte bei statischem Bildinhalt entsprechend Fig. 1a und bei dynamischem Bildinhalt entsprechend Fig. 1b zwischengespeichert.

Der Bewegungsdetektor kann nach verschiedenen bekannten Verfahren realisiert werden. Es können z.B. für jeden zu codierenden Block bzw. Doppel-Block die Absolutwert-Differenzen von Bildpunkten aus Blöcken gleicher räumlicher Lage von Bild n und Bild n-1 gebildet werden. Alternativ können statt des Bewegungsdetektors vom Hybridcoder 25 gebildete Bewegungsvektoren (z.B. für jeweils zwei übereinanderliegende Blöcke) verwendet werden. Überschreitet die jeweilige Summe dieser Absolutwert-Differenzen und/oder der Betrag des entsprechenden Bewegungsvektors für diesen Block bzw. diese Blöcke eine vorgegebene Schwelle (d.h. es liegt dynamischer Bildinhalt vor), werden die Bildpunkte entsprechend Fig. 1b, anderenfalls entsprechend Fig. 1a in Blockspeicher 23 zwischengespeichert.

Die Umsortierung kann entsprechend folgender Anweisung vorgenommen werden:

```
DO y=1,N/2
  DO x=1,N
    B_out1(x,y) = B_in1(x,2*y-1)
    B_out1(x,y) = B_in1(x,2*y)
  ENDDO
ENDDO
DO y=1,N/2
  DO x=1,N
    B_out1(x,y+N/2) = B_in2(x,2*y-1)
    B_out1(x,y+N/2) = B_in2(x,2*y)
  ENDDO
ENDDO ,
```

wobei $B_{in1}$ der örtlich höher liegende Block und N eine gerade Zahl ist.

**Patentansprüche**

1. Verfahren zur Bildsignal-Codierung oder -Decodierung von Bildpunkt-Blöcken einer vorgegebenen Größe mit Hilfe einer Transformation bzw. inversen Transformation unter Verwendung eines Hybridcoders (25), der Blöcke von Bildpunkten codiert, wobei im Fall von dynamischem Bildinhalt eine modifizierte Verarbeitung stattfindet, **gekennzeichnet** durch die folgenden Verfahrensschritte :

   - unabhängig von Bewegung im Bildinhalt werden stets quadratische Blöcke der vorgegebenen Größe transformiert bzw. rücktransformiert;
   - im Fall von dynamischem Bildinhalt (24) werden vor der Codierung Zeilenabschnitte von Blöcken von interlace-abgetasteten Bildpunkten (11-14, 21-24) innerhalb von jeweils zwei vertikal übereinanderliegenden Blöcken der vorgegebenen quadratischen Größe so umsortiert bzw. -adressiert (Fig. 1b), daß innerhalb jedes dieser Blöcke nur Zeilenabschnitte aus einem Halbbild der Bildsignale enthalten sind, und nach der Decodierung die Zeilenabschnitte wieder in der ursprünglichen Reihenfolge angeordnet bzw. adressiert (Fig. 1a);
   - im Fall von statischem Bildinhalt findet keine solche Umsortierung bzw. -adressierung von Zeilenabschnitten statt;
   - den codierten Bildsignalen ist eine Information zugefügt, die angibt, ob eine Umsortierung bzw. -adressierung von Zeilenabschnitten stattgefunden hat, wobei diese Information bei der Decodierung entsprechend ausgewertet wird;
   - jeweils vier Luminanz-Bildpunkt-Blöcke der vorgegebenen quadratischen Größe sind in quadratischer Form zusammengefaßt und innerhalb dieser vier zusammengefaßten Blöcke sind die vertikal übereinanderliegenden Blöcke angeordnet, wobei die den codierten Bildsignalen zugefügte Information jeweils gemeinsam für die vier zusammengefaßten Blöcke gilt.

2. Verfahren nach Anspruch 1, wobei die Blöcke eine vorgegebene Größe von 8*8 Bildpunkten haben.

3. Verfahren nach Anspruch 1 oder 2, wobei die Umsortierung bzw. -adressierung der Zeilenabschnitte vom Ausgangssignal eines Bewegungsdetektors (24) und/oder von im Hybridcoder (25) generierten Bewegungsvektoren gesteuert wird.

4. Verfahren nach einem der Ansprüche 1 bis 3, wobei zur Bewegungsdetektion für jeden zu codierenden Block bzw. Doppel-Block die Absolutwert-Differenzen von Bildpunkten aus Blöcken gleicher räumlicher Lage von zwei aufeinanderfolgenden Bildern gebildet werden, wobei, wenn die jeweilige Summe dieser Absolutwert-Differenzen für diesen Block bzw. diese Doppel-Blöcke eine vorgegebene Schwelle überschreitet, die Umsortierung bzw. -adressierung der Zeilenabschnitte stattfindet.

Claims

1. Method for the picture signal coding or decoding of picture element blocks of a predetermined size with the help of a transformation or inverse transformation using a hybrid coder (25) which codes blocks of picture elements, whereby a modified processing takes place in the event of dynamic picture content, **characterised** by the following method steps:

   - only quadratic blocks of the predetermined size are transformed or inverse transformed independently of movement in the picture content;
   - in the case of dynamic picture content (24), before the coding, line sections of blocks of interlace scanned picture elements (11-14, 21-24) within two vertically superimposed blocks of the predetermined quadratic size are resorted or readdressed (figure 1b) so that within each of these blocks only line sections from one field of the picture signals are contained and after decoding the line sections are again arranged or addressed in the original sequence (figure 1a);
   - in the case of static picture content, no such resorting or readdressing of the line sections takes place;
   - an item of information which indicates whether a resorting or readdressing of the line section has taken place and which is correspondingly evaluated during the decoding, is added to the coded picture signals;
   - in each case, four luminance picture element blocks of the predetermined quadratic size are combined in a square shape and the vertically superimposed blocks are arranged within these four combined blocks, the additional information added to the coded picture signals in each case being valid in common for the four combined blocks.

2. Method according to claim 1, in which the blocks have a predetermined size of 8 x 8 picture elements.

3. Method according to claim 1 or 2, wherein the resorting or readdressing of the line sections is controlled by the output signal of a movement detector (24) and/or by movement vectors generated in the hybrid coder (25).

4. Method according to any of claims 1 to 3, wherein for movement detection for each of the blocks or double blocks to be coded the differences in the absolute value of picture elements from blocks of the same spatial position of two successive pictures are formed, such that, if the instantaneous sum of these differences in the absolute value for this block or this double block exceeds a predetermined threshold, the resorting or readdressing of the line sections takes place.

Revendications

1. Procédé pour le codage ou le décodage des signaux vidéo de blocs de points d'image de taille définie, au moyen d'une transformation ou d'une transformation inverse en utilisant un codeur hybride (25) qui effectue le codage de blocs de points d'image, sachant qu'une transformation modifiée est appliquée lorsque le contenu d'image est dynamique, procédé **caractérisé en ce** qu'il comporte les étapes suivantes :

   - indépendamment de la présence de mouvement dans le contenu d'image, la transformation et la transformation inverse s'appliquent toujours aux blocs quadratiques de la taille définie ;
   - en présence d'un contenu d'image dynamique (24), des segments de lignes de blocs de points d'image balayés par entrelacement (11-14, 21-24), sont modifiés en séquence ou ré-adressés (fig. 1b), avant le codage, à l'intérieur de deux blocs superposés ayant la taille quadratique définie, de telle manière que chacun de ces blocs ne comprennent que des segments de lignes provenant d'une trame des signaux vidéo ; après le décodage, lesdits segments de lignes sont à nouveau organisés ou adressés suivant l'ordre initial (fig. 1a) ;
   - en présence d'un contenu d'image statique, cette modification ou ce ré-adressage des segments de lignes n'a pas lieu ;
   - les signaux vidéo codés sont accompagnés d'une information indiquant si la modification ou le ré-adressage des segments de lignes a eu effectivement lieu, cette information étant analysée en conséquence lors du décodage ;
   - chaque fois quatre blocs de points d'image de luminance de la taille quadratique définie sont regroupés en forme de carré, lesdits blocs superposés étant disposés dans ce groupe de quatre blocs, sachant que l'information ajoutée aux signaux vidéo codés s'applique communément aux quatre blocs réunis.

2. Procédé selon la revendication 1 caractérisé en ce que les blocs possèdent une taille définie de 8*8 points d'image.

3. Procédé selon l'une quelconque des revendications 1 ou 2 caractérisé en ce que la modification ou le ré-adressage des segments de lignes est commandé par l'intermédiaire du signal de sortie d'un détecteur de mouvement (24) et/ou par des vecteurs de mouvement générés dans le codeur hybride (25).

4. Procédé selon l'une quelconque des revendications 1 à 3 caractérisé en ce que pour chaque bloc ou double bloc à coder, la détection du mouvement se fait en formant les différences des valeurs absolues des points d'image des blocs de deux images successives ayant la même position spatiale, sachant que les segments de lignes sont modifiés en séquence ou ré-adressés dès que la somme des différences des valeurs absolues du bloc ou double bloc concerné dépasse un certain seuil défini.

| 11 | 11 | 11 | 11 | | 11 | 11 | 11 | 11 |
|----|----|----|----|---|----|----|----|----|
| 12 | 12 | 12 | 12 | | 13 | 13 | 13 | 13 |
| 13 | 13 | 13 | 13 | | 21 | 21 | 21 | 21 |
| 14 | 14 | 14 | 14 | | 23 | 23 | 23 | 23 |
|    |    |    |    | |    |    |    |    |
| 21 | 21 | 21 | 21 | | 12 | 12 | 12 | 12 |
| 22 | 22 | 22 | 22 | | 14 | 14 | 14 | 14 |
| 23 | 23 | 23 | 23 | | 22 | 22 | 22 | 22 |
| 24 | 24 | 24 | 24 | | 24 | 24 | 24 | 24 |
|    | a  |    |    | |    | b  |    |    |

FIG.1

FIG. 2